# EUROPÄISCHE PATENTSCHRIFT

(11) **EP 2 488 917 B1**
(45) Veröffentlichungstag und Bekanntmachung des Hinweises auf die Patenterteilung: **20.08.2014**
(21) Anmeldenummer: 11704940.3
(22) Anmeldetag: 11.02.2011
(51) Int. Cl.: G02F 2/00, G01N 21/35

(54) **ANORDNUNG ZUM ERZEUGEN EINES THz-SIGNALS MIT EINSTELLBARER ZEIT- ODER PHASENLAGE**
SYSTEM FOR PRODUCING A THz-SIGNAL HAVING AN ADJUSTABLE TIME POSITION OR PHASE POSITION
DISPOSITIF POUR PRODUIRE UN THz-SIGNAL COMPORTANT UNE POSITION DE TEMPS OU DE PHASE RÉGLABLE

(30) Priorität: 30.04.2010 DE 102010019134
(43) Veröffentlichungstag der Anmeldung: 22.08.2012
(73) Patentinhaber: Fraunhofer-Gesellschaft zur Förderung der angewandten Forschung e.V., 80686 München (DE)
(72) Erfinder: SARTORIUS, Bernd, 14052 Berlin (DE); ROEHLE, Helmut, 13629 Berlin (DE); STANZE, Dennis, 14059 Berlin (DE)
(74) Vertreter: Pfenning, Meinig & Partner GbR
(86) Internationale Anmeldenummer: PCT/EP2011/000858
(87) Internationale Veröffentlichungsnummer: WO 2011/134562

(56) Entgegenhaltungen:
- US-A1- 2006 011 840
- WIBERG A ET AL: "Dispersion-Tolerant Millimeter-Wave Photonic Link Using Polarization-Dependent Modulation", JOURNAL OF LIGHTWAVE TECHNOLOGY, IEEE SERVICE CENTER, NEW YORK, NY, US, Bd. 25, Nr. 10, 1. Oktober 2007 (2007-10-01), Seiten 2984-2991, XP011194088, ISSN: 0733-8724, DOI: 10.1109/JLT.2007.904935
- THORSTEN GÖBEL ET AL: "Direct phase detection in continuous-wave photomixing THz systems", 2008 IEEE LEOS ANNUAL MEETING CONFERENCE PROCEEDINGS : NEWPORT BEACH, CALIFORNIA, USA, 9 - 13 NOVEMBER 2008, IEEE, PISCATAWAY, NJ, USA, 9. November 2008 (2008-11-09), Seiten 222-223, XP031366182, ISBN: 978-1-4244-1931-9
- SATORIUS, SCHLAK, STANZE, ROEHLE, KÜNZEL, SCHMIDT, BACH, KUNKEL, SCHELL: "Continuous wave terahertz systems exploiting 1.5 mum telecom technologies", OPTICS EXPRESS, Bd. 17, Nr. 17, 17. August 2009 (2009-08-17), Seiten 15001-15007, XP002632619,
- GÖBEL, SCHÖNHERR, MEISSNER, ET AL.: "Extern stabilisierte DFB-LASER zu hochauflösenden Dauerstrich-Terahertz-Spektroskopie", TECHNISCHES MESSEN, Bd. 75, Nr. 12, 1. Oktober 2008 (2008-10-01), Seiten 623-630, XP002632620, DOI: 10.1524/teme.2008.0901
- SINYUKOV A M ET AL: "Rapid-phase modulation of terahertz radiation for high-speed terahertz imaging and spectroscopy", OPTICS LETTERS, OSA, OPTICAL SOCIETY OF AMERICA, WASHINGTON, DC, US, Bd. 33, Nr. 14, 15. Juli 2008 (2008-07-15) , Seiten 1593-1595, XP001514964, ISSN: 0146-9592, DOI: DOI:10.1364/OL.33.001593
- AL-MUMIN ET AL: "Injection locked multi-section gain-coupled dual mode DFB laser for terahertz generation", OPTICS COMMUNICATIONS, NORTH-HOLLAND PUBLISHING CO. AMSTERDAM, NL, Bd. 275, Nr. 1, 10. Mai 2007 (2007-05-10), Seiten 186-189, XP022070335, ISSN: 0030-4018, DOI: DOI:10.1016/J.OPTCOM.2007.03.001
- OGUSU M ET AL: "Millimeter-wave WDM sources using two-mode injection-locked FP lasers", OPTICS COMMUNICATIONS, NORTH-HOLLAND PUBLISHING CO. AMSTERDAM, NL, Bd. 251, Nr. 1-3, 1. Juli 2005 (2005-07-01), Seiten 75-93, XP004933057, ISSN: 0030-4018, DOI: DOI:10.1016/J.OPTCOM.2005.02.063
- CHENG HONG ET AL: "Single-Sideband Modulation Based on an Injection-Locked DFB Laser in Radio-Over-Fiber Systems", IEEE PHOTONICS TECHNOLOGY LETTERS, IEEE SERVICE CENTER, PISCATAWAY, NJ, US, Bd. 22, Nr. 7, 1. April 2010 (2010-04-01), Seiten 462-464, XP011301150, ISSN: 1041-1135
- SONG Y ET AL: "ALL-OPTICAL BROADBAND PHASE MODULATION OF A SUBCARRIER IN A RADIO OVER FIBER SYSTEM", OPTICS LETTERS, OSA, OPTICAL SOCIETY OF AMERICA, WASHINGTON, DC, US, Bd. 31, Nr. 22, 15. November 2006 (2006-11-15), Seiten 3234-3236, XP001500598, ISSN: 0146-9592, DOI: DOI:10.1364/OL.31.003234
- TOPCU S ET AL: "A new type of fiber-optic-based interferometric ellipsometer for in situ and real-time measurements", REVIEW OF SCIENTIFIC INSTRUMENTS, AIP, MELVILLE, NY, US, Bd. 74, Nr. 10, 1. Oktober 2003 (2003-10-01), Seiten 4442-4447, XP012040459, ISSN: 0034-6748, DOI: DOI:10.1063/1.1606118
- CATHERINE E. TOWERS, DAVID P. TOWERS, DERRYCK T. REID, WILLIAM N. MACPHERSON, ROBERT R. J. MAIER, AND JULIAN D. C. JONES: "Fiber interferometer for simultaneous multiwavelength phase measurement with a broadband femtosecond laser", OPTICS LETTERS, Bd. 29, Nr. 23, 1. Dezember 2004 (2004-12-01), Seiten 2722-2724, XP002655278, DOI: 10.1364/OL.29.002722
- Olaf Brox: "DFB-Laser mit integriert optischer Rückkopplung für die optische Signalverarbeitung", Universitätsbibiliothek der TU Berlin: Digitales Repositorium , Nr. urn:nbn:de:kobv:83-opus-9705 7. April 2005 (2005-04-07), Seiten 1-148, XP002655779, Gefunden im Internet: URL:http://opus.kobv.de/tuberlin/volltexte /2005/970/ [gefunden am 2011-07-29]

## Beschreibung

Die Erfindung betrifft ein THz-MESSSYSTEM MIT einer Anordnung zum Erzeugen eines Signals mit variabel einstellbarer Zeit- oder Phasenlage nach dem Oberbegriff des Hauptanspruchs. Bei dem zeitlich verschiebbaren Signal, das damit erzeugt werden kann, handelt es sich um ein optisches Schwebungssignal oder um ein durch Umwandeln eines solchen optischen Signals erhaltenes elektrisches oder durch elektromagnetische Strahlung entsprechender Frequenz gegebenes Signal.

In der optischen und elektrischen Messtechnik ist die Einstellung der Zeit- bzw. Phasenlage von modulierten Signalen eine oft benötigte Funktionalität. Bei interferometrischen Effekten geht es um die Phasenla-ge einer Lichtwelle, also um Strecken im µm-Bereich und Zeiten im fs-Bereich. Hierfür gibt es bereits elektrisch ansteuerbare Phasenschieber auf Halbleiterbasis.

Wenn größere Verzögerungen im ns- bis ps-Bereich benötigt werden, entsprechend Laufstrecken elektromagnetischer Wellen der Größenordnung von 0,1 mm bis 10 cm, ist die übliche Lösung, die Laufstrecken elektromagnetischer Wellen durch mechanische Längenvariationen zu verändern. Bewegliche reflektierende Spiegel, schnelles Schalten von Strecken mit abgestuften Längen, Dehnen von Fasern oder Nutzung der Dispersion von Fasern in Kombination mit Wellenlängen-Abstimmung sind gängige Möglichkeiten. Solche optomechanischen Verzögerungsleitungen werden z.B. in optischen Auto-korrelations-Messplätzen, in Pump-Probe-Experimenten oder in optischen Terahertz-Systemen eingesetzt. Verzögerungsleitungen, die mechanische Verstellungen benötigen, sind jedoch langsam, groß, schwer, stoßempfindlich und teuer. Gewünscht ist auch für Verzögerungen im ps- bzw. ns-Bereich eine auf kompakten und robusten Halbleiter-Chips mit elektrischer und schneller Ansteuerung basierende Lösung.

Zu diesem Zweck schlägt die Druckschrift DE 10 2006 058 395 A1 eine Anordnung zum Erzeugen eines Signals mit variabel einstellbarer Zeit- oder Phasenlage vor, die zwei Laser zum Erzeugen einer ersten Lichtkomponente mit einer ersten Wellenlänge und einer zweiten Lichtkomponenten mit einer von der ersten Wellenlängen abweichenden zweiten Wellenlänge sowie einen Phasenmodulator zum Variieren einer Phase der ersten Lichtkomponente umfasst, wobei die Anordnung eingerichtet ist zum Erzeugen eines Schwebungssignals durch Überlagern der beiden Lichtkomponenten. Basis ist also eine Überlagerung von zwei Laserwellen mit geringfügig unterschiedlichen Wellenlängen, durch die das Schwebungssignal entsteht, dessen Frequenz von der Wellenlängendifferenz abhängt. Die Phasenlage des Schwebungssignals kann durch selektive Phasenmodulation einer der Laserwellen verschoben werden. Die Phasenmodulation von Laserwellen ist dabei mit halbleiterbasierten, kompakten elektrooptischen Phasenmodulatoren mit hohen Frequenzen möglich. Je nach Frequenz des Schwebungssignals kann die Phasenmodulation eine Zeitverschiebung im ps- oder mm-Bereich bewirken. So verschiebt eine Phasenmodulation einer der Laserwellen um π bei einer Schwebungsfrequenz von 100 GHz das Schwebungssignal ebenfalls um n, nämlich um 5 ps oder 1,5 mm. Bei einer Schwebungsfrequenz von 10 GHz ergibt sich dementsprechend eine Verschiebung des Schwebungssignals um 50 ps oder 15 mm, bei 1 THz um 500 fs oder 150 µm. Das so zeitmodulierte Schwebungssignal kann dann mit einem zeitstabilen Signal korreliert werden oder mit einer Detektionseinheit in ein elektrisches Signal gewandelt und als solches genutzt werden. Optische Schwebungssignale können also als Hebel dienen, um schnelle Phasenmodulationen einer Laserwelle in um ein Vielfaches größere Zeit- oder Laufstrecken-Modulationen von Signalen umzusetzen.

Bei dem Stand der Technik aus der Druckschrift DE 10 2006 058 395 A1 sind die beiden Laser und der Phasenmodulator zusammen mit Kopplern, die zum Überlagern der beiden Lichtkomponenten benötigt werden, auf einem gemeinsamen Chip realisiert. Eine derartig integrierte Ausführung der vollständigen Anordnung war dabei notwendig, um Phaseninstabilitäten in individuellen Lichtpfaden für die verschiedenen Lichtanteile zu vermeiden. Solche Phaseninstabilitäten müssen unbedingt vermieden werden, weil sie zu großen Zeit- bzw. Wegstrecken-Instabilitäten hoch multipliziert werden, und zwar in dem gleichen Maß, in dem die Verschiebung der Phase einer der Lichtkomponenten durch den gewünschten Effekt zu einer ungleich größeren Verschiebung des Schwebungssignals führt. Dieses Problem wird bei dem genannten Stand der Technik durch die integrierte Ausführung auf einem Chip gelöst, weil dadurch die individuellen Lichtwege sehr kurz und sehr phasenstabil sind. Nach Überlagerung der beiden Lichtkomponenten sind Phaseninstabilitäten nicht mehr kritisch, da sie sich nahezu identisch auf beide Lichtkomponenten auswirken und das Schwebungssignal praktisch nicht mehr beeinflussen. Das Schwebungssignal kann daher auch z.B. in Glasfasern geführt werden, ohne dass störende Effekte auftreten. Eine Ersetzung der bei dem genannten Stand der Technik auf dem Chip realisierten Lichtpfade vor und zwischen den Kopplern durch Lichtleitfasern wäre dagegen ohne dramatische Auswirkungen auf die Stabilität des Schwebungssignals nicht möglich, weil z.B. bereits die Wärmestrahlung einer Hand aus einem Abstand von mehreren Zentimetern die Lichtphase in einer Lichtleitfaser stark beeinflusst.

Es ist daher nicht möglich, bei dem genannten Stand der Technik unabhängige Komponenten für die Laser, die Koppler und den Phasenmodulator zu verwenden, die hier alle auf dem einen Chip integriert werden müssen. Das hat einerseits hohe Entwicklungskosten zur Folge, weil nicht auf ohne weiteres erhältliche Komponenten zurückgegriffen werden kann, und andererseits haben die auf dem Chip integrierten Komponenten typischerweise nicht so gute Eigenschaften wie entsprechende individuell optimierte Komponenten.

Weitere THz-Meßsysteme aus dem Stand der Technik, mit ähnlichen Komponentenanordnungen, finden sich in den folgenden Zeitschriftenartikeln:
THORSTEN GÖBEL ET AL: "Direct phase detection in continuous-wave photomixing THz systems", 2008 IEEE LEOS ANNUAL MEETING CONFERENCE PROCEEDINGS : NEWPORT BEACH, CALIFORNIA, USA, 9 - 13 NOVEMBER 2008, IEEE, PISCATAWAY, NJ, USA, 9. November 2008 (2008-11-09), Seiten 222-223, ISBN: 978-1-4244-1931-9, (Auf diesem Artikel basiert die zweiteilige Form des Anspruchs 1)
SATORIUS, SCHLAK, STANZE, ROEHLE, KÜNZEL, SCHMIDT, BACH, KUNKEL, SCHELL: "Continuous wave terahertz systems exploiting 1.5 mum telecom technologies", OPTICS EXPRESS, Bd. 17, Nr. 17, 17. August 2009 (2009-08-17), Seiten 15001-15007
GÖBEL, SCHÖNHERR, MEISSNER, ET AL.: "Extern stabilisierte DFB-LASER zu hochauflösenden Dauerstrich-Terahertz-Spektroskopie", TECHNISCHES MESSEN, Bd. 75, Nr. 12, 1. Oktober 2008 (2008-10-01), Seiten 623-630, DOI: 10.1524/teme.2008.0901
SINYUKOV A M ET AL: "Rapid-phase modulation of terahertz radiation for high-speed terahertz imaging and spectroscopy", OPTICS LETTERS, OSA, OPTICAL SOCIETY OF AMERICA, WASHINGTON, DC, US, Bd. 33, Nr. 14, 15. Juli 2008 (2008-07-15), Seiten 1593-1595, ISSN: 0146-9592, DOI: DOI:10.1364/OL.33.001593

Ein Beispiel aus dem Stand der Technik - auf einen anderen technischen Gebiet als die beanspruchte Erfindung- für die Verwendung eines Phasenmodulators zur Modulierung einer von zwei Wellenlängen eines optischen Signals zur Datenübertragung ist dem folgenden Zeitschriftenartikel zu entnehmen:
WIBERG A ET AL: "Dispersion-Tolerant Millimeter-Wave Photonic Link Using Polarization-Dependent Modulation", JOURNAL OF LIGHTWAVE TECHNOLOGY, IEEE SERVICE CENTER, NEW YORK, NY, US, Bd. 25, Nr. 10, 1. Oktober 2007 (2007-10-01), Seiten 2984-2991, ISSN: 0733-8724, DOI: 10.1109/JLT.2007.904935

Der Erfindung liegt also die Aufgabe zugrunde, ein THz-Messsystem mit einer entsprechenden Anordnung zum Erzeugen eines Signals mit variabel einstellbarer Zeit- oder Phasenlage vorzuschlagen, die nicht notwendigerweise auf einem Chip integriert realisiert werden muss und für deren Realisierung auf herkömmliche Komponenten, insbesondere auf bereits verfügbare Hochleistungslaser oder in weiten Wellenlängenbereichen stimmbare Halbleiterlaser, zurückgegriffen werden kann. Der Erfindung liegt ferner die Aufgabe zugrunde, ein vergleichsweise einfach realisierbares und mit hoher Präzision durchführbares, wenig störanfälliges Verfahren zum Erzeu-gen eines TH_{z}-Signals vorzuschlagen, bei dem eine Zeit-oder Phasenlage dieses Signals variabel eingestellt werden kann.

Diese Aufgabe wird erfindungsgemäß gelöst durch ein THz-Messsystem mit den kennzeichnenden Merkmalen des Hauptanspruchs in Verbindung mit den Merkmalen des Oberbegriffs des Hauptanspruchs sowie durch eine Verwendung dieses THz-Messsystems gemäß Anspruch 15. Vorteilhafte Ausgestaltungen und Weiterentwicklungen der Erfindung ergeben sich mit den Merkmalen der Unteransprüche.

Die als Bestandteil des THz-Messsystems vorgeschlagene Anordnung zum Erzeugen einer Signals mit variabel einstellbarer Zeit- oder Phasenlage sieht mindestens eine Lichtquelle zum Erzeugen einer ersten Lichtkomponente mit einer ersten Wellenlänge und einer zweiten Lichtkomponente mit einer von der ersten Wellenlänge abweichenden zweiten Wellenlänge sowie einen Phasenmodulator zum Variieren einer Phase der ersten Lichtkomponente vor und ist eingerichtet zum Erzeugen eines Schwebungssignals durch Überlagern der beiden Lichtkomponenten. Zusätzlich weist diese Anordnung eine gemeinsame Lichtleitfaser zum Einkoppeln beider Lichtkomponenten auf, wobei der Phasenmodulator an einem der mindestens einen Lichtquelle abgewandten Ende dieser Lichtleitfaser oder im Verlauf dieser Lichtleitfaser angeordnet ist und wobei der Phasenmodulator für beide Lichtkomponenten transparent ist und eingerichtet ist, die Phase der ersten Lichtkomponente selektiv unabhängig von einer Phase der zweiten Lichtkomponente oder stärker als die Phase der zweiten Lichtkomponente zu variieren. Eine typischerweise nur geringe Wellenlängendifferenz zwischen den beiden Wellenlängen und eine davon abhängende Schwebungsfrequenz des Schwebungssignals kann dabei abhängig von einer gewünschten Verzögerungszeit gewählt werden.

Die dadurch realisierte Grundidee ist es, einen Signalweg für beide Lichtkomponenten weitgehend durch eine gemeinsame Faser zu führen, so dass sonst störende Effekte, wie Änderungen von Brechungsindizes und Polarisationen durch äußere Einflüsse auf Lichtleitfasern, sich nahezu gleich auf beide Lichtkomponenten auswirken, so dass das Schwebungssignal praktisch unbeeinflusst bleibt. Dabei erlaubt die Erfindung in vorteilhafter Weise einen robusten und kostengünstigen Aufbau unter Verwendung herkömmlicher Komponenten.

Die mindestens eine Lichtquelle kann z.B. durch zwei vorzugsweise einmodige Laser zum Erzeugen jeweils einer der beiden Lichtkomponenten realisiert sein. Unerwünschte Einflüsse auf nur eine der Lichtkomponenten, die das Schwebungssignal unkontrolliert verändert könnten, lassen sich besonders gut ausschließen, wenn stattdessen ein Zweimodenlaser zur Erzeugung beider Lichtkomponenten verwendet wird. Besonders vorteilhaft ist es, wenn dabei mindestens einer der Laser bzw. wenn der Zweimodenlaser zum Variieren der Wellenlänge mindestens einer der beiden Lichtkomponenten stimmbar ist, so dass eine Frequenz oder Pulslänge des Schwebungssignals verstellt werden kann. So sind einerseits verschiedene Frequenzbereiche im THz-Bereich adressierbar und andererseits sind dann sehr unterschiedliche Zeit- und Wegmodulationen des Schwebungssignals bei gegebener Ansteuerung des Phasenmodulators einstellbar.

Die vorgeschlagene Modulationstechnik basiert auf der Steuerung des aus den beiden Lichtkomponenten gewonnenen Schwebungssignals. In vielen Fällen werden jedoch steuerbare Pulse benötigt. In einer vorteilhaften Ausführung der Erfindung weist die Anordnung daher einen hinter dem Phasenmodulator geschalteten Pulskompressor auf, der z.B. durch einen ultralangen optischen Halbleiterverstärker oder, insbesondere bei hohen Leistungen, durch eine nichtlineare Glasfaser realisiert sein kann.

Die gewünschte Zeitmodulation des Schwebungssignals, also ein Variieren seiner Zeit- oder Phasenlage, wird bei der vorgeschlagenen Anordnung durch den selektiven Phasenmodulator erreicht, der nur oder verstärkt eine der Lichtkomponenten moduliert, indem die Phase der ersten Lichtkomponente selektiv unabhängig von einer Phase der zweiten Lichtkomponente oder stärker als die Phase der zweiten Lichtkomponente variiert wird, wenn der Phasenmodulator entsprechend angesteuert wird. Vorzugsweise sollte der Phasenmodulator dabei dazu eingerichtet sein, die Phase der ersten Lichtkomponente oder eine relative Phase zwischen den Lichtkomponenten um mindestens n, vorzugsweise um mindestens 2π zu variieren. Dabei sollte der Phasenmodulator ein möglichst hohes Geschwindigkeitspotential besitzen, vorzugsweise bis in den MHz- oder GHz-Bereich hinein. Besonders vorteilhaft ist es, wenn die Phase der ersten Lichtkomponente oder die relative Phase durch eine entsprechend eingerichtete Steuereinheit auch mit einer periodischen sägezahnförmigen Funktion um jeweils 2n oder ein Vielfaches davon verschiebbar ist. Dann kann das Schwebungssignal kontinuierlich praktisch beliebig weit verschoben werden, und zwar unabhängig von einer Anfangsphase, die von einem jeweiligen Arbeitspunkt des Phasenmodulators abhängt.

Im Hinblick auf einen möglichst einfachen und robusten Aufbau sollte der Phasenmodulator rein elektrisch, also ohne Bewegung beweglicher Teile, zum Variieren der Phase der ersten Lichtkomponente ansteuerbar sein. Dazu können verschiedene elektrooptische Phasenmodulatoren verwendet werden.

Eine erste Möglichkeit beruht darauf, eine sehr starke Polarisationsabhängigkeit vieler Modulatoren auszunutzen. So ist z.B. der (lineare) Pockels-Effekt grundsätzlich polarisationsabhängig. Auch andere Effekte können polarisationsabhängig gemacht werden, z.B. wenn eine Effizienz eines Phasenmodulators für Licht einer bestimmten Wellenlänge von einem Abstand dieser Wellenlänge zu einer Bandkante abhängt und die Bandkante für TE- und TM-polarisiertes Licht unterschiedlich gestaltet werden kann. Das ist z.B. in so genannten Quantum-Well-Strukturen und Strained-Layer-Strukturen der Fall. Da zur Erzeugung einer Schwebung Wellen oder Wellenanteile gleicher Polarisation überlagert werden müssen, während für die gewünschte selektive Phasenmodulation unter Ausnutzung polarisationsabhängiger Effekte die Lichtkomponenten in unterschiedlicher und vorzugsweise orthogonaler Polarisation in den Phasenmodulator eingestrahlt werden müssen, sind zur Ausnutzung der Polarisationsabhängigkeit derartiger Modulatoren weitere Maßnahmen notwendig. Eine geeignete Ausführung der Erfindung sieht dazu vor, dass der Phasenmodulator polarisationsabhängig ist, wobei die mindestens eine Lichtquelle zum Erzeugen der beiden Lichtkomponenten mit unterschiedlichen, typischerweise orthogonalen Polarisationen eingerichtet und durch die Lichtleitfaser so mit dem Phasenmodulator verbunden ist, dass die Polarisationen der beiden Lichtkomponenten zwei Hauptachsen des Phasenmodulators entsprechen, und wobei die Anordnung einen hinter dem Phasenmodulator angeordneten Polarisator zum Überlagern von transmittierten Anteilen der zwei Lichtkomponenten aufweist. Der Polarisator könnte unter Umständen auch durch eine andere Anordnung zum Überlagern von Lichtanteilen orthogonaler Polarisation ersetzt werden, beispielsweise durch eine Kombination eines Modensplitters, eines Polarisationskonverters und eines Kopplers. Als polarisationsabhängig sei dabei ein Phasenmodulator dann bezeichnet, wenn er eine von einer Polarisation einer Lichtwelle abhängigen Einfluss auf eine Phase dieser Lichtwelle hat. Als Hauptachsen seien dabei die Richtungen der Polarisationen bezeichnet, für die der Phasenmodulator bei gegebener Ansteuerung jeweils eine definierte Phasen- bzw. Zeitverzögerung bewirkt.

Der zum Überlagern der transmittierten Anteile vorzugsweise vorgesehene Polarisator kann als polarisationsabhängiger Absorber oder polarisationsabhängiger Verstärker realisiert sein, typischerweise wird es sich um einen einfachen Polarisationsfilter handeln. Eine Polarisierungsrichtung des Polarisators schließt dazu mit den Polarisationen beider Lichtkomponenten jeweils einen nicht verschwindenden Winkel ein, typischerweise einen Winkel von jeweils 45°, unter Umständen aber auch einen von diesem Wert abweichenden oder einstellbaren Winkel zum Ausgleichen von Intensitätsunterschieden der Lichtkomponenten. Durch Einstellen des Winkels durch Drehen des Polarisators können nämlich die relativen Amplituden der schwebenden Wellen beeinflusst und insbesondere auf gleiche Werte eingestellt werden, was zu einem optimalen Schwebungssignal führt. Der Polarisationsfilter teilt beide Lichtkomponenten vektoriell jeweils in einen vom Polarisator geblockten Teil und einen Teil, den der Polarisator transmittieren lässt, so dass die transmittierten Teile der beiden Lichtkomponenten gleich polarisiert sind und sich zu dem Schwebungssignal überlagern können. Der Phasenmodulator kann bei dieser Ausführung der Erfindung auf Basis eines Materials realisiert sein, das verstärkt oder vorzugsweise ausschließlich für Licht einer Polarisation einen elektrooptischen Effekt hat, oder auf Basis einer Wellenleiterstruktur mit Quantum-Well- oder Strained-Layer-Halbleiterschichten mit unterschiedlichen Bandabständen für TE- und TM-polarisierte Wellen.

Eine andere Ausführung der Erfindung sieht vor, dass der Phasenmodulator einen wellenlängenselektiven Reflektor zum Reflektieren der zweiten Lichtkomponente, der für Licht der ersten Wellenlänge transmittierend ist, sowie einen weiteren Reflektor zum Reflektieren der ersten Lichtkomponente aufweist, wobei zwischen den beiden Reflektoren ein phasenmodulierender Bereich zum Variieren der Phase der ersten Lichtkomponente vorgesehen ist. Dieser phasenmodulierende Bereich kann z.B. durch einen herkömmlichen elektrooptischen Phasenmodulator gegeben sein. Der genannte weitere Reflektor kann z.B. durch eine einfache Verspiegelung realisiert sein. Diese Ausführung ist insbesondere dann zu bevorzugen, wenn es nicht möglich ist, die beiden Lichtkomponenten mit unterschiedlichen Polarisationen zu erzeugen, beispielsweise bei Verwendung eines entsprechenden Zweimodenlasers (Dual-Mode Laser). Die zweite Lichtkomponente, deren Phase bei einer Ansteuerung des Phasenmodulators unverändert bleiben soll, wird bei dieser Ausführung durch den dem phasenmodulierenden Bereich vorgeschaltetem wellenlängenselektiven Reflektor vor Erreichen des phasenmodulierenden Bereichs reflektiert. Die erste Lichtkomponente dagegen wird erst nach Durchlaufen des phasenmodulierenden Bereichs mit Hilfe des weiteren Reflektors reflektiert und durchläuft den phasenmodulierenden Bereich anschließend noch einmal. Durch Überlagerung der beiden an den verschiedenen Reflektoren reflektierten Lichtkomponenten ergibt sich wieder das aus einer nicht phasenmodulierten und einer (doppelt) phasenmodulierten Welle zusammengesetzte Schwebungssignal, das durch Ansteuern des phasenmodulierenden Bereichs in gewünschter Weise verschoben werden kann.

Zusätzlich kann der Phasenmodulator bei dieser Ausführung einen Zirkulator oder einen Faserkoppler mit mindestens drei Ausgängen aufweisen, wobei zwei dieser Ausgänge einem Eingang und einem Ausgang des Phasenmodulators entsprechen, während ein dritter dieser Ausgänge optisch mit dem wellenlängenselektiven Reflektor gekoppelt ist. Dadurch kann in einfacher Weise erreicht werden, dass die Lichtkomponenten dem Ensemble aus den beiden Reflektoren und dem dazwischen liegenden phasenmodulierenden Bereich von der Seite zugeführt werden, an der der wellenlängenselektive Reflektor angeordnet ist, während die dort reflektierte und die dort wieder austretende Lichtkomponente wieder miteinander überlagert werden und zum Ausgang des Phasenmodulators geführt werden. Eingangs- und Ausgangssignale des phasenmodulierenden Bereichs mit den beiden Reflektoren können so gut getrennt werden.

Der wellenlängenselektive Reflektor kann z.B. durch einen Interferenzfilter oder einen Distributed Bragg Reflector (DBR) gegeben sein. Stattdessen kann auch ein anderes dispersives Stufenfilter verwendet werden. Ein hochreflektierendes Stop-Band sollte dabei jeweils an die zweite Wellenlänge angepasst sein, während ein nichtreflektierender Bereich selbstverständlich die erste Wellenlänge umfassen sollte.

Dort, wo die beiden Lichtkomponenten jeweils einen individuellen Strahlengang haben, müssen Phaseninstabilitäten wieder weitestmöglich vermieden werden. Dazu können der wellenlängenselektive Reflektor und/oder der weitere Reflektor beispielsweise direkt auf Modulator-Facetten, also Oberflächen des phasenmodulierenden Bereichs, aufgebracht, beispielsweise aufgedampft oder aufgeklebt, werden. Das gilt insbesondere, wenn ein einfaches Interferenz-Stufenfilter als wellenlängenselektiver Reflektor verwendet wird. Vorteilhaft ist auch eine monolithische Integration mit DBR- Strukturen als wellenlängenselektivem Reflektor in einem III-V-Materialsystem oder eine hybride Integration mit dispersiven Strukturen auf Basis preisgünstiger Polymere oder eines Silizium-Materials. Im Hinblick auf eine möglichst gute Phasenstabilität ist es jedenfalls vorteilhaft, wenn der wellenlängenselektive Reflektor oder der weitere Reflektor oder vorzugsweise beide Reflektoren mit dem phasenmodulierenden Bereich eine monolithische Struktur bilden. Der weitere Reflektor kann im einfachsten Fall durch eine einfache Verspiegelung der entsprechenden Modulatorfacette realisiert werden.

Unabhängig davon, wie der selektive Phasenmodulator genau realisiert ist, ergibt sich durch die gemeinsame Lichtleitfaser für beide Lichtkomponenten bei der vorgeschlagenen Anordnung im THz-Messsystem eine vorteilhaft geringe Anfälligkeit der eingestellten Zeit- oder Phasenlage des erzeugten Signals auf Störungen in optischen Pfaden der Anordnung, die sich z.B. durch Temperaturunterschiede oder mechanische Belastungen ergeben könnten, weil getrennte Pfade für die beiden Lichtkomponenten weitestmöglich vermieden werden.

Typischerweise wird die vorgeschlagene Anordnung des THz-Messsystem einen dem Phasenmodulator nachgeschaltete Detektionseinheit zum Umwandeln des Schwebungssignals in ein elektrisches oder durch eine elektromagnetische Welle gegebenes Signal aufweisen. Dieses Signal hat dann eine entsprechend dem Schwebungssignal einstellbare Zeit- oder Phasenlage und kann z.B. zur Zeitsteuerung eines elektrischen Messsystems verwendet werden, beispielsweise in relativer Zeitkorrelation zu einem den Phasenmodulator ansteuernden Signal. Dabei kann die Detektionseinheit durch einen Detektor gegeben sein oder mehrere Detektoren umfassen.

Eine besonders vorteilhafte Anordnung für eine von der beanspruchten Erfindung abweichende Anwendung ergibt sich, wenn zusätzlich ein vor den Phasenmodulator geschalteter Koppler zum Auskoppeln eines Anteils einer noch nicht durch den Phasenmodulator modulierten Schwebung aus beiden Lichtkomponenten vorgesehen ist, wobei die Detektionseinheit dann vorzugsweise eingerichtet ist, sowohl diesen Anteil als auch das den Phasenmodulator verlassende Schwebungssignal zu erfassen. Zweckmäßigerweise sollte die Detektionseinheit dann geeignet sein, zum Ermitteln einer Korrelation des genannten ausgekoppelten Anteils und des Schwebungssignals bei einer Modulation der Phase der ersten Lichtkomponente und damit der Zeit- oder Phasenlage des Schwebungssignals. Dazu kann ein weiterer Koppler zum Überlagern des genannten Anteils und des modulierten Schwebungssignals vorgesehen sein.

Eine zweckmäßige Sensoranordnung für eine von der beanpruchten Erfindung abweichende Anwendung ergibt sich, wenn in diesem Fall eine Probe in einen Strahlengang des genannten ausgekoppelten Anteils oder in einen Strahlengang des mit dem Phasenmodulator verschobenen Schwebungssignals gebracht wird. Dann kann eine durch die Probe verursachte Veränderung eines mit der Detektionseinheit ermittelten Korrelationssignals ermittelt und so auf Eigenschaften der Probe geschlossen werden.

Bei der beanspruchten Erfindung weist die Anordnung im THZ-Messsystem eine nichtlineare Komponente, z.B. einen Fotomischer, zum Erzeugen einer elektromagnetischen Strahlung mit einer Frequenz im THz-Bereich, die einer Schwebungsfrequenz des Schwebungssignals entspricht, auf. Die nichtlineare Komponente bildet also einen THz-Sender. Die Anordnung kann dann z.B. für Spektrometer, Reflektometer oder andere Sensoranordnungen mit THz-Strahlungen verwendet werden. Dabei wird ein vor dem Phasenmodulator ausgekoppelter Strah-lungsanteil für eine Aktivierung eines entsprechenden Empfängers genutzt, um eine kohärente Detekti-on der Strahlung zu erlauben. Die Anordnung ist also ein kohärentes THz-Messsystem. Der grundsätzliche Aufbau eines solchen THz-Messsystems ist, abgesehen von der hier beschriebenen Erzeugung des zeitlich verschiebbaren Aktivierungssignals, beispielsweise in der Druckschrift US 6 348 683 B1 beschrieben. Sender und Empfänger können selbstverständlich auch vertauscht werden, so dass der vor dem Phasenmodulator ausgekoppelte Strahlungsanteil zum Aktivieren des Senders verwendet wird, während der in seiner Zeit- und Phasenlage verschobene Anteil zum Aktivieren des Empfängers verwendet wird. Die nichtlineare Komponente zum Erzeugen der elektromagnetischen Strahlung muss nicht unbedingt mit dem ursprünglichen Schwebungssignal beaufschlagt werden, sondern kann stattdessen auch einem daraus gewonnenen komprimierten Pulssignals ausgesetzt werden. Die so erzeugte elektromagnetische Strahlung natürlich auch andere Frequenzen als die Schwebungsfrequenz haben oder enthalten.

Nach alledem ergeben sich also vorteilhafte Verfahren durch eine Verwendung eines THz-Messsystems mit einer Anordnung beschriebener Art zum Erzeugen eines dem Schwebungssignal entsprechenden oder durch Umwandlung des Schwebungssignals gewonnenen Signals, wobei die Zeit- oder Phasenlage dieses Signals durch Ansteuern des Phasenmodulators, der auch als Phasenschieber bezeichnet werden kann, verändert wird. Bei diesen Verfahren kann es sich insbesondere um Messverfahren zum Untersuchen von Proben handeln, wobei die Probe THz-Strahlung ausgesetzt wird, die durch Aktivierung eines THz-Senders mit dem Schwebungssignal oder einem ausgekoppelten Teil des Schwebungssignals gewonnen wird. Bei derartigen Messverfahren kann jeweils eine Abhängigkeit eines Detektorsignals von der Zeit- oder Phasenlage des Signals ausgewertet werden.

Vergleichsbeispiele und Ausführungsbeispiele der Erfindung werden nachfolgend anhand der Fign. 1 bis 8 erläutert. Es zeigt
- Fig. 1: in schematischer Darstellung die Funktionsweise einer Anordnung zum Erzeugen eines Signals mit variabel einstellbarer Zeit- oder Phasenlage,
- Fig. 2: ebenfalls in schematischer Darstellung eine andere Ausführung einer derartigen Anord-nung,
- Fig. 3: in entsprechender Darstellung eine vergleichbare Anordnung in einer anderen Ausführung,
- Fig. 4: ebenfalls in schematischer Darstellung eine Abwandlung der Ausführung aus Fig. 3,
- Fig. 5: eine ebenfalls schematisch dargestellte vergleichbare Anordnung, die zusätzlich einen Pulskompressor umfasst,
- Fig. 6: eine schematisch dargestellte Sensoranordnung , die eine von der beanspruchten Erfindung abweichende Anwendung einer derartigen Anordnung zum Erzeugen eines Signals darstellt,
- Fig. 7: eine entsprechend dargestellte ähnliche Sensoranordnung, die zusätzlich zwei Pulskompressoren aufweist und
- Fig. 8: eine Sensoranordnung, bei der es sich um einen Messaufbau für eine kohärente THz-Detektion mit einem erfindungsgemäßen THz-Messsystem handelt, in einer den Fign. 6 und 7 entsprechenden schematischen Darstellung.

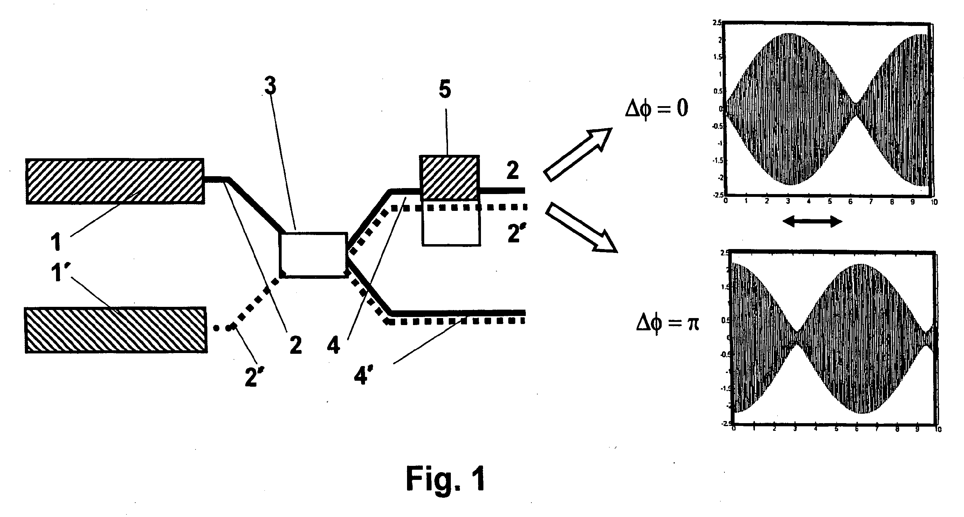

In Fig. 1 ist in schematischer Weise eine Anordnung zum Erzeugen eines Schwebungssignals dargestellt, wobei eine Zeit- oder Phasenlage dieses Schwebungssignals modulierbar, also variabel einstellbar ist. Diese Anordnung weist zwei einmodige Laser 1 und 1' auf, von denen wenigstens einer stimmbar ist. Eine erste Lichtkomponente 2, die den Laser 1 verlässt, und eine vom Laser 1' erzeugte zweite Lichtkomponente 2' werden in einem optischen Koppler 3 überlagert. Dabei hat die erste Lichtkomponente 2 eine erste Wellenlänge, während die zweite Lichtkomponente 2' eine von der ersten Wellenlänge geringfügig abweichende zweite Wellenlänge hat, so dass mit dem Koppler 3 ein Schwebungssignal erzeugt wird. Dieses Schwebungssignal, das beide Lichtkomponenten 2 und 2' enthält, wird an zwei Ausgängen des Kopplers 3 jeweils in eine gemeinsame Lichtleitfaser 4 und 4' eingekoppelt. An einem Ende oder im Verlauf der Lichtleitfaser 4 ist ein selektiver Phasenmodulator 5 angeordnet. Dieser Phasenmodulator 5 ist für beide Lichtkomponenten 2 und 2' transparent und hat die Eigenschaft, selektiv eine Phase der ersten Lichtkomponente 2 unabhängig von einer Phase der zweiten Lichtkomponente 2' oder zumindest deutlich stärker als die Phase der zweiten Lichtkomponente 2' zu variieren, und zwar abhängig von einem Ansteuersignal, mit dem der Phasenmodulator 5 angesteuert werden kann. Die Zeit- oder Phasenlage des die Lichtleitfaser 4 bzw. den Phasenmodulator 5 verlassenden Schwebungssignals lässt sich dadurch abhängig von der Ansteuerung des Phasenmodulators 5 variieren, was in zwei Diagrammen in Fig. 1 rechts dargestellt ist, wo das Schwebungssignal einmal für eine verschwindende Phasenverschiebung (oben) und einmal für eine Phasenverschiebung der ersten Lichtkomponente 2 um n (unten) dargestellt ist.

Bei dem Phasenmodulator 5 handelt es sich um einen rein elektrisch, also ohne Bewegung beweglicher Teile, ansteuerbaren elektrooptischen Phasenschieber, mit dem die Phase der ersten Lichtkomponente 2 um mindestens 2π verschoben werden kann. Dabei kann der Phasenmodulator 5 auch mit sehr hohen Frequenzen im MHz- oder GHz-Bereich angesteuert werden, wobei die Änderung der relativen Phasen zwischen den beiden Lichtkomponenten 2 und 2' (in Fig. 1 rechts als ΔΦ bezeichnet) auch mittels einer entsprechend programmierten Steuereinheit sägezahnförmig um jeweils 2π verstellbar sein kann. Der Koppler 3 dient bei der in Fig. 1 gezeigten Anordnung auch zum Auskoppeln eines Anteils einer noch nicht durch den Phasenmodulator 5 modulierten Schwebung aus beiden Lichtkomponenten 2 und 2', wobei dieser Anteil durch die Lichtleitfaser 4' geführt wird und z.B. als Referenzsignal dienen kann.

Anstelle der beiden Laser 1 und 1' kann bei anderen Ausführungen auch ein Zweimodenlaser zum Erzeugen der beiden Lichtkomponenten 2 und 2' und damit zum Erzeugen des Schwebungssignals verwendet werden, wobei dann auf den Koppler 3 verzichtet werden kann, sofern kein nicht phasenverschobenes Referenzsignal benötigt wird.

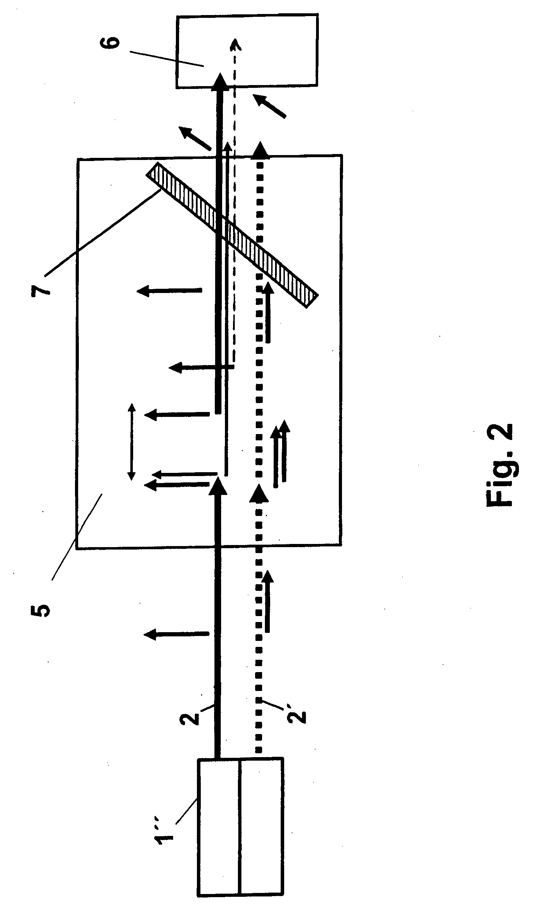

Ein Beispiel für eine derartige Anordnung ist in Fig. 2 gezeigt. Wiederkehrende Merkmale sind hier und in den weiteren Figuren wieder mit den gleichen Bezugszeichen versehen. Als Lichtquelle für die beiden Lichtkomponenten 2 und 2' dient hier ein Zweimodenlaser 1" (Dual Mode Laser), der durch die gemeinsame Lichtleitfaser 4 für beide Lichtkomponenten 2 und 2' mit dem Phasenmodulator 5 verbunden ist. Der Zweimodenlaser 1", anstelle dessen auch durch eine andere Lichtquelle zum Erzeugen zweier Lichtwellen unterschiedlicher Wellenlängen verwendet werden kann, ist so gestaltet, dass zumindest die Wellenlänge einer der beiden Lichtkomponenten 2 und 2' verstellt werden kann. Die Anordnung aus Fig. 2 weist ferner eine hinter den Phasenmodulator 5 geschaltete Detektionseinheit 6 zum Umwandeln des den Phasenmodulator verlassenden Schwebungssignals in ein elektrisches Signal auf. Die Detektionseinheit 6 kann wieder durch eine gemeinsame Lichtleitfaser für beide Lichtkomponenten 2 und 2' oder auf andere Weise optisch mit einem Ausgang des Phasenmodulators 5 gekoppelt sein. So wird ein elektrisches Signal erzeugt, dessen Zeit-oder Phasenlage entsprechend der Zeit- oder Phasenlage des optischen Schwebungssignals mittels des Phasenmodulators 5 verstellt werden kann. Das so erzeugte elektrische Signal kann z.B. zur Zeitsteuerung eines elektrischen Messsignals verwendet werden.

Der Phasenmodulator 5 ist bei der in Fig. 2 gezeigten Ausführung polarisationsabhängig, wobei der Zweimodenlaser 1", der die beiden jeweils monochromatischen Lichtkomponenten 2 und 2' mit geringfügig unterschiedlichen Wellenlängen und mit orthogonalen Polarisationen erzeugt, durch die Lichtleitfaser 4 so mit dem Phasenmodulator 5 gekoppelt ist, dass die Polarisationen der beiden Lichtkomponenten 2 und 2' zwei Hauptachsen des polarisationsabhängigen Phasenmodulators 5 entsprechen. An einem Ausgang des Phasenmodulators 5, der aufgrund seiner Polarisationsabhängigkeit nur eine Phase der ersten Lichtkomponente 2 verschiebt, ist ein Polarisator 7 zum Überlagern von durch den Polarisator 7 transmittierten Anteilen der beiden Lichtkomponenten 2 und 2' vorgesehen. Der Polarisator 7, der im einfachsten Fall durch einen einfachen Polarisationsfilter realisiert sein kann, ist dabei so angeordnet, dass eine Polarisierungsrichtung des Polarisators 7 mit den Polarisationen beider Lichtkomponenten 2 und 2' jeweils einen nicht verschwindenden Winkel von typischerweise 45° einschließt, so dass ein Schwebungssignal aus den transmittierten Anteilen der beiden Lichtkomponenten 2 und 2' aus dem Polarisator 7 austritt, dessen Zeit- bzw. Phasenlage durch Ansteuern des Phasenmodulators 5 verstellt werden kann. Der Polarisator 7 kann auch verdrehbar ausgeführt sein, so dass die genannten Winkel verstellt werden können um Intensitätsunterschiede zwischen den Lichtkomponenten 2 und 2' auszugleichen. Statt eines polarisationsabhängigen Absorbers kann auch ein polarisationsabhängiger Verstärker als Polarisator 7 verwendet werden. Der Phasenmodulator 5 ist auf Basis eines Materials mit elektrooptischem Effekt nur für Licht einer Polarisation realisiert oder durch eine Wellenleiterstruktur mit Quantum-Well- oder Strained-Layer-Halbleiterschichten mit unterschiedlichen Bandabständen für TE- und TM-polarisierte Wellen.

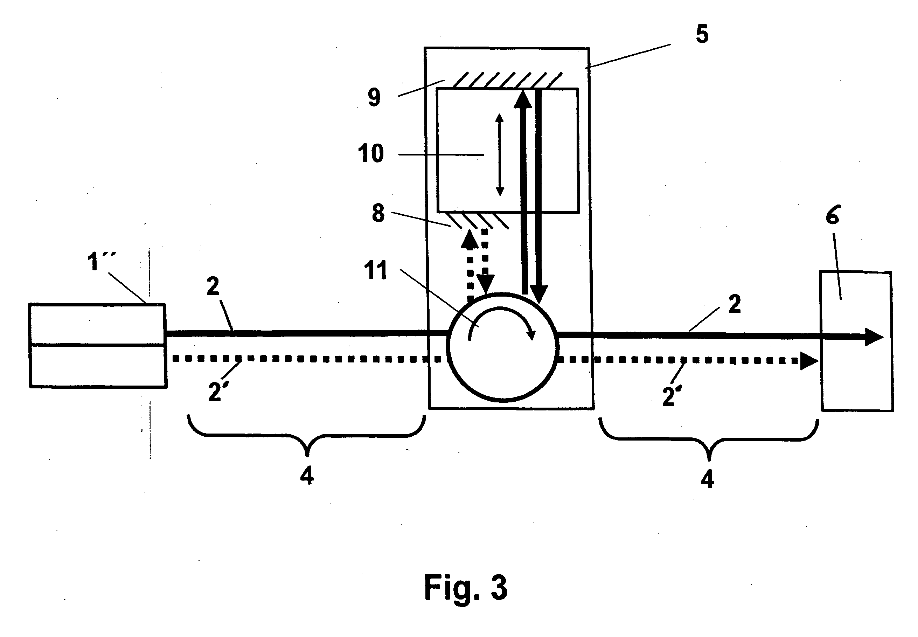

Ein anderes Beispiel einer entsprechenden Anordnung zum Erzeugen eines zeitlich bzw. bezüglich seiner Phasenlage verschiebbaren Signals ist in Fig. 3 dargestellt. Der Zweimodenlaser 1" erzeugt die beiden Lichtkomponenten 2 und 2' in diesem Fall mit gleicher Polarisation, so dass der Phasenmodulator 5 anders ausgeführt werden muss, um die Phase der ersten Lichtkomponente 2 selektiv modulieren zu können. In diesem Fall weist er einen wellenlängenselektiven Reflektor 8 zum Reflektieren nur der zweiten Lichtkomponente 2' auf, der für Licht der ersten Wellenlänge transmittierend ist, sowie einen weiteren Reflektor 9 zum Reflektieren der ersten Lichtkomponente 2. Zwischen den beiden Reflektoren 8 und 9 ist ein phasenmodulierender Bereich 10 zum Variieren der Phase der ersten Lichtkomponente 2 vorgesehen, der durch einen herkömmlichen Phasenschieber realisiert ist und der durch Anlegen elektrischer Spannung so ansteuerbar ist, dass er die Phase der ersten Lichtkomponente 2 in gewünschtem Maß verzögert.

Der wellenlängenselektive Reflektor 8 und der weitere Reflektor 9 bilden mit dem phasenmodulierenden Bereich 10 eine monolithische Struktur, wobei der weitere Reflektor 9 durch eine einfache Verspiegelung einer oberen Facette des Phasenschiebers realisiert ist. Der wellenlängenselektive Reflektor 8 ist hier durch einen einfachen Interferenzfilter gegeben, wobei ein hochreflektierendes Stop-Band an die zweite Wellenlänge angepasst ist, während ein nicht reflektierender Bereich dieses Reflektors 8 die erste Wellenlänge umfasst. Anstelle des Interferenzfilters kann natürlich auch ein anderes dispersives Stufenfilter verwendet werden. Um das vom Zweimodenlaser **1**" kommende Licht zu dem phasenmodulierenden Bereich 10 mit den beiden Reflektoren 8 und 9 zu lenken und das von dort zurückreflektierte Licht wiederum zu einem Ausgang des Phasenmodulators 5 zu führen, von dem es zur Detektionseinheit 6 geleitet wird, weist der Phasenmodulator 5 einen Zirkulator 11 mit drei Ausgängen auf. Zwei dieser Ausgänge entsprechen einem Eingang und dem Ausgang des Phasenmodulators 5, während ein dritter Ausgang optisch mit dem wellenlängenselektiven Reflektor 8 gekoppelt ist. Anstelle des Zirkulators 11 könnte bei Abwandlungen der hier gezeigten Anordnung auch ein Faserkoppler mit mindestens drei Ausgängen verwendet werden.

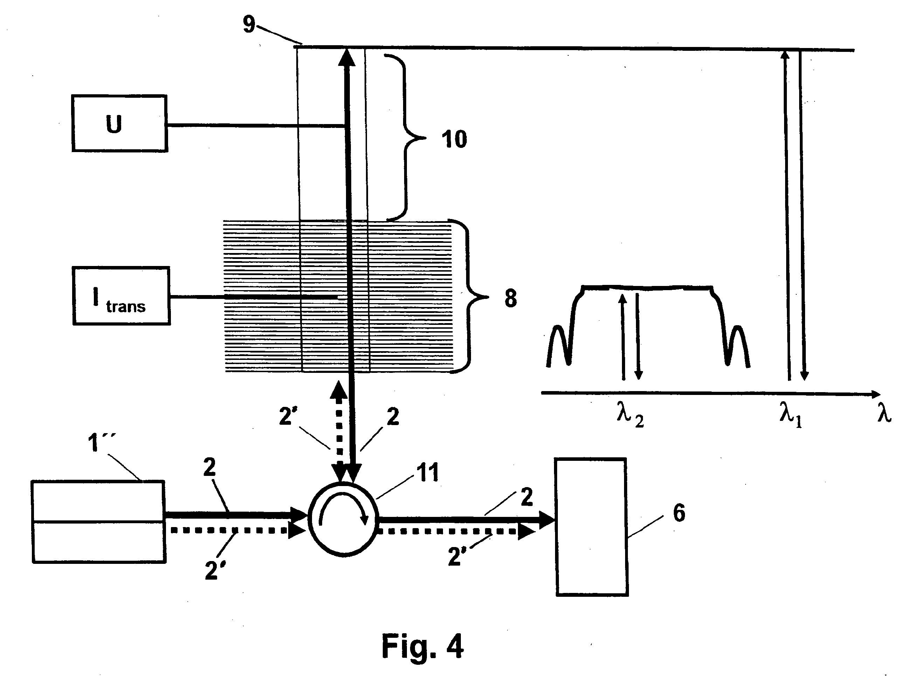

In Fig. 4 ist eine, in keiner Ausführungsform der Erfindung beanspruchte, Abwandlung der Anordnung aus Fig. 3 gezeigt, bei der der wellenlängenselektive Reflektor 8 durch einen PFL gegeben ist, an den ein Steuerstrom Iₜᵣₐₙₛ angelegt ist, der so gewählt ist, dass der PFL die gewünschten Transmissions- und Reflexionseigenschaften hat. Rechts neben dem Reflektor 8 ist das Stop-Band des PFL veranschaulicht, innerhalb dessen die Wellenlänge λ₂ der zweiten Lichtkomponente 2' liegt. Der Phasenschieber, der den phasenmodulierenden Bereich 10 bildet, wird in üblicher Weise durch eine Steuerspannung U angesteuert, um die Phase der ersten Lichtkomponente 2 im gewünschten Maß zu verzögern. Die Wellenlänge λ₁ der ersten Lichtkomponente liegt außerhalb des Stop-Bandes des PFL, so dass die erste Lichtkomponente 2 an dem auch hier wieder durch eine einfache Verspiegelung realisierten weiteren Reflektor 9 reflektiert wird. Der wellenlängenselektive Reflektor 8 kann schließlich statt durch einen PFL auch durch eine DFB-Struktur oder durch einen DBR der in einer Ausführungsform der Erfindung beansprucht wird, realisiert sein. Auch hier bildet der wellenlängenselektive Reflektor 8 und der weitere Reflektor 9 mit dem phasenmodulierenden Bereich 10 eine monolithische Struktur, wobei auch eine Hybridstruktur denkbar wäre, bei der der wellenlängenselektive Reflektor 8 mit III-V-Halbleitermaterial, in Polymeren oder auf Silizium basierend, mit dem phasenmodulierenden Bereich 10 integriert ist.

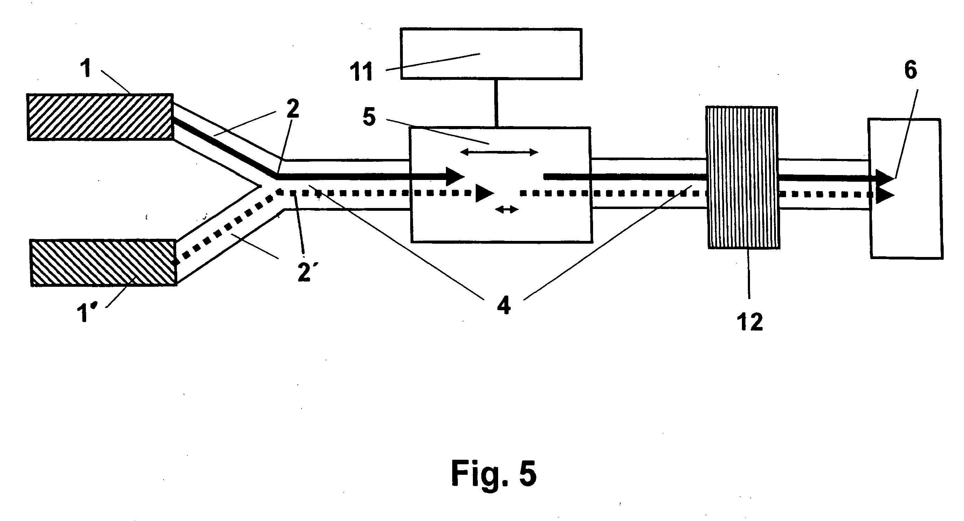

In Fig. 5 ist eine den bereits beschriebenen Anordnungen vergleichbare Anordnung gezeigt, bei der wiederkehrende Merkmale wieder mit den gleichen Bezugszeichen gekennzeichnet sind. Zusätzlich ist hier eine elektrische Steuerung 11 zum Ansteuern des selektiven Phasenmodulators 5 gezeigt. Zwischen den Phasenmodulator 5 und der Detektionseinheit 6 ist bei dieser Ausführung ein Pulskompressor 12 geschaltet, der das Schwebungssignal zu Pulsen umformt. Mit dieser Anordnung kann also ein Signal aus aufeinanderfolgenden Pulsen erzeugt werden, dessen Zeitlage mit dem Phasenmodulator 5 durch eine entsprechende Ansteuerung mittels der elektrischen Steuerung 11 variiert werden kann. Bei dem Pulskompressor 12 handelt es sich um einen ultralangen optischen Halbleiterverstärker oder eine nichtlineare Glasfaser.

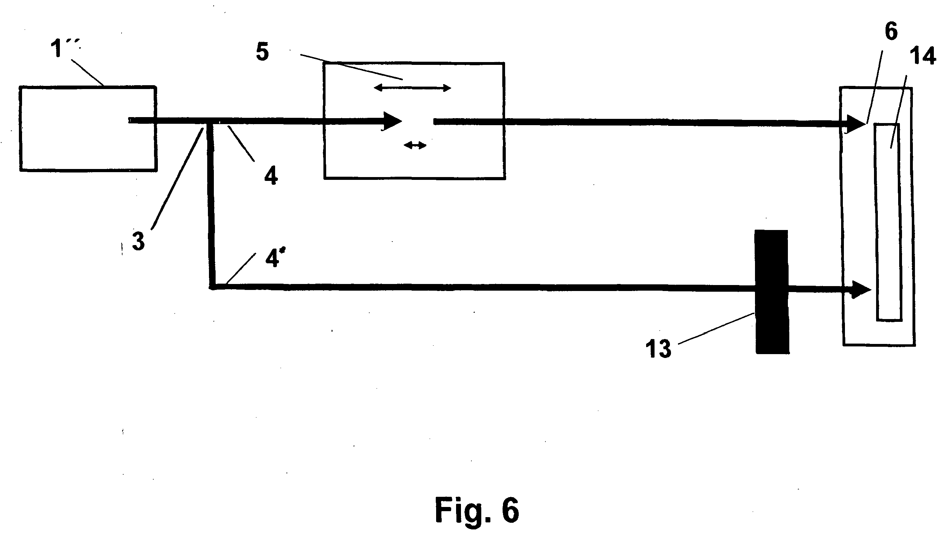

In Fig. 6 ist gezeigt, wie eine Anordnung beschriebener Art zu einer, nicht beanspruchten Sensoranordnung zum Untersuchen einer Probe 13 erweitert werden kann. Auch hier sind wiederkehrende Merkmale wieder mit den gleichen Bezugszeichen versehen und müssen nicht mehr eigens beschrieben werden. Anstelle des Zweimodenlasers 1" kann natürlich auch eine andere Lichtquelle zum Erzeugen der beiden Lichtkomponenten 2 und 2' geringfügig unterschiedlicher Wellenlänge verwendet werden, beispielsweise die in den Fign. 1 und 5 gezeigten einmodigen Laser 1 und 1'. Der Koppler 3 dient hier zum Auskoppeln eines Anteils des Schwebungssignals, das durch Überlagern der beiden Lichtkomponenten 2 und 2' erhalten wird. Die Detektionseinheit 6 ist in diesem Fall eingerichtet, sowohl diesen ausgekoppelten Anteil als auch das den Phasenmodulator 5 verlassende Schwebungssignal zu erfassen, und enthält einen Korrelator 14 zum Ermitteln einer Korrelation beider bei einer Modulation der Phase des Schwebungssignals in der Lichtleitfaser 4 durch Modulieren der Phase der ersten Lichtkomponente im Phasenmodulator 5. Die Probe 13 ist hier in einem Strahlengang des mit dem Koppler 3 ausgekoppelten Anteils angeordnet, so dass das den Phasenmodulator 5 verlassende Schwebungssignal als Referenzsignal dient. Genauso gut könnte die Probe im Strahlengang des den Phasenmodulator 5 verlassenden Schwebungssignals angeordnet werden und der ausgekoppelte und durch die Lichtleiterfaser 4' geführte Anteil als Referenzsignal dienen. In beiden Fällen kann mittels der Detektionseinheit 6 mit dem Korrelator 14 eine durch die Probe 13 verursachte Veränderung eines mit der Detektionseinheit 6 ermittelten Korrelationssignals ermittelt werden.

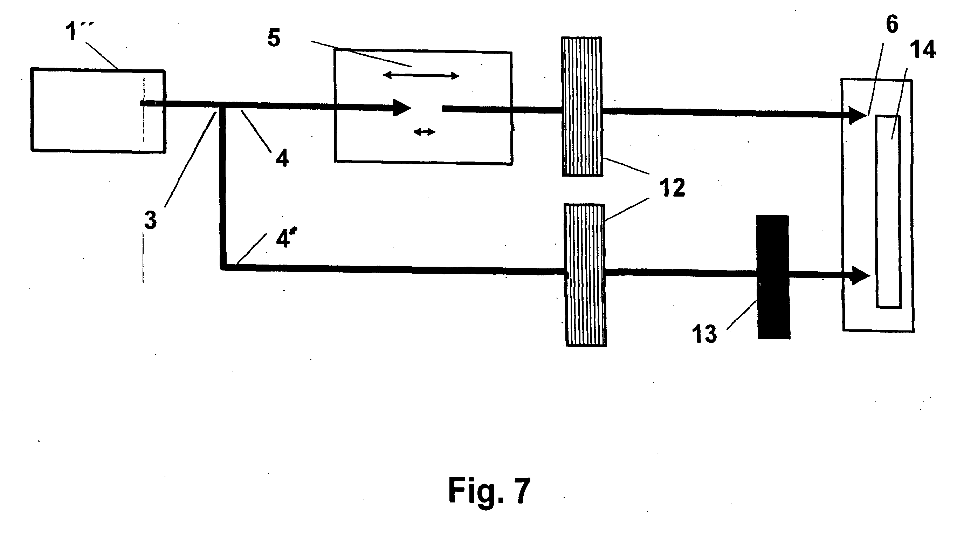

In Fig. 7 ist eine, nicht beanspruchte, Sensoranordnung gezeigt, die sich von der Sensoranordnung aus Fig. 6 nur dadurch unterscheidet, dass sowohl in einen Verlauf der Lichtleitfaser 4' vor der Probe 13 als auch hinter einen Ausgang des Phasenmodulators 5 jeweils ein Pulskompressor 12 geschaltet ist, so dass hier sowohl das die Probe 13 durchlaufende Signal als auch das Referenzsignal, dessen Zeitlage durch den Phasenmodulator 5 variiert werden kann, jeweils zu einer Folge von Pulsen umgeformt wird.

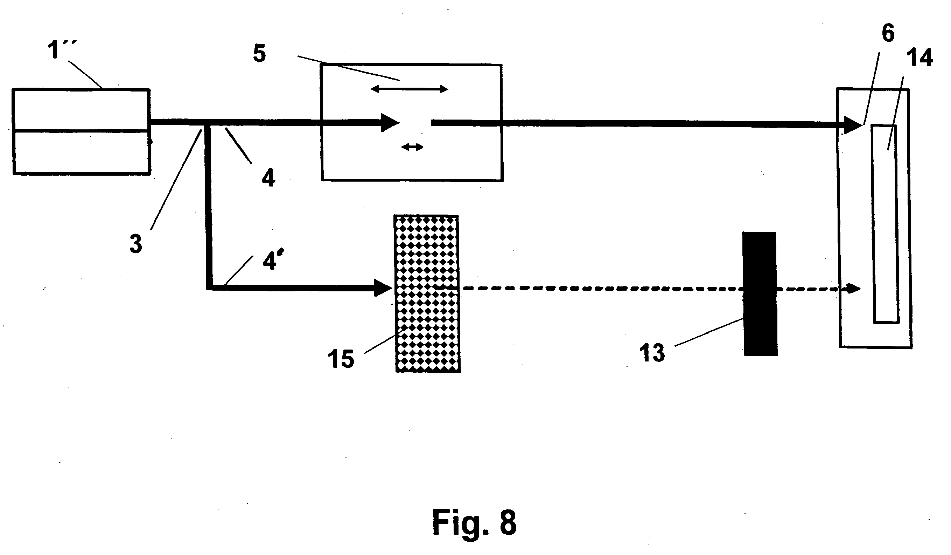

Eine andere, der Erfindung entsprechende Sensoranordnung, die weitgehend gleiche Komponenten verwendet wie die beiden zuvor beschriebenen Sensoranordnungen, ist in Fig. 8 gezeigt. Diese Sensoranordnung weist zusätzlich einen durch eine nichtlineare Komponente realisierten Fotomischer 15 auf, der durch den mit dem Koppler 3 ausgekoppelten Anteil des Schwebungssignals aktiviert wird und der einen THz-Sender bildet. Mit dem Fotomischer 15 wird elektromagnetische Strahlung einer Frequenz erzeugt, die der Schwebungsfrequenz des Schwebungssignals entspricht und die hier im THz-Bereich liegt, womit insbesondere der Frequenzbereich von 0,1 THz bis 10 THz bezeichnet sei. Die Detektionseinheit 6 ist in diesem Fall durch einen THz-Empfänger gegeben, der durch das optische Schwebungssignal aktiviert wird, das durch die Lichtleitfaser 4 geführt wird und dessen Phasenlage mit dem Phasenmodulator 5 eingestellt wird. Selbstverständlich könnte der Phasenmodulator 5 auch vor den Fotomischer 15 geschaltet werden, also in einen Verlauf der Lichtleitfaser 4'. Dann wird der Fotomischer 15 durch das phasenverschobene Schwebungssignal aktiviert, das den Phasenmodulator 5 verlässt, während zum Aktivieren des THz-Empfängers eine entsprechende nicht in ihrer Phase manipulierte Schwebung dient.

## Patentansprüche

1. THz-Messsystem, umfassend einen THz-Sender mit einem lichtempfindlichen Element und einen THz-Empfänger mit einem lichtempfindlichen Element sowie eine Anordnung zum Erzeugen eines Signals mit variabel einstellbarer Zeit- oder Phasenlage,
wobei die genannte Anordnung mindestens eine Lichtquelle zum Er- zeugen einer ersten Lichtkomponente (2) mit einer ersten Wellenlänge und einer zweiten Lichtkomponente (2') mit einer von der ersten Wellenlänge abweichenden zweiten Wellenlänge sowie einen Phasenmodulator (5) zum Variieren einer Phase der ersten Lichtkomponente (2) umfasst und zum Erzeugen eines Schwebungssignals durch Überlagern der beiden Lichtkomponenten (2, 2') eingerichtet ist,
wobei der THz-Sender und der THz-Empfänger durch das Schwebungssignal oder durch einen ausgekoppelten Teil des Schwebungssignals oder durch ein optisches Signal, das sich durch Umformen des Schwebungssignals oder eines ausgekoppelten Teils des Schwebungssignals ergibt, aktivierbar sind,
wobei der Phasenmodulator (5) zwischen der mindestens einen Lichtquelle und dem lichtempfindlichen Element des THz-Empfängers oder zwischen der mindestens einen Lichtquelle und dem lichtempfindlichen Element des THz-Senders angeordnet ist, wobei die genannte Anordnung eine gemeinsame Lichtleitfaser (4) zum Einkoppeln beider Lichtkomponenten (2, 2') aufweist,
**dadurch gekennzeichnet,**
**dass** der Phasenmodulator an einem der mindestens einen Lichtquelle abgewandten Ende dieser Lichtleitfaser (4) oder im Verlauf der Lichtleitfaser (4) angeordnet ist und wobei der Phasenmodulator (5) für beide Lichtkomponenten (2, 2') transparent ist und eingerichtet ist, die Phase der ersten Lichtkomponente (2) selektiv unabhängig von einer Phase der zweiten Lichtkomponente (2') oder stärker als die Phase der zweiten Lichtkomponente (2') zu variieren,
wobei die Anordnung zusätzlich einen vor den Phasenmodulators (5) geschalteten Koppler (3) zum Auskoppeln eines Anteils einer noch nicht durch den Phasenmodulator modulierten Schwebung aus beiden Lichtkomponenten (2, 2') aufweist, wobei entweder der THz-Empfänger durch den vor dem Phasenmodulator (5) ausgekoppelten Anteil und der THz-Sender durch das den Phasenmodulator (5) verlassende Schwebungssignal aktiviert ist oder der THz-Sender durch den vor dem Phasenmodulator (5) ausgekoppelten Anteil und der THz-Empfänger durch das den Phasenmodulator (5) verlassende Schwebungssignal aktiviert ist.

2. THz-Messsystem nach Anspruch 1, **dadurch gekennzeichnet, dass** die mindestens eine Lichtquelle durch zwei vorzugsweise einmodige Laser (1, 1') oder durch einen Zweimodenlaser (1") gegeben ist.

3. THz-Messsystem nach Anspruch 2, **dadurch gekennzeichnet, dass** mindestens einer der Laser (1, 1') bzw. dass der Zweimodenlaser (1") zum Variieren der Wellenlänge mindestens einer der Lichtkomponenten (2, 2') stimmbar ist.

4. THz-Messsystem nach einem der Ansprüche 1 bis 3, **dadurch gekennzeichnet, dass** der Phasenmodulator (5) ohne mechanische Bewegung beweglicher Teile elektrisch zum Variieren der Phase der ersten Lichtkomponente (2) ansteuerbar und vorzugsweise eingerichtet ist, die Phase der ersten Lichtkomponente (2) um mindestens π zu variieren.

5. THz-Messsystem nach einem der Ansprüche 1 bis 4, **dadurch gekennzeichnet, dass** der Phasenmodulator (5) polarisationsabhängig ist, wobei die mindestens eine Lichtquelle zum Erzeugen der beiden Lichtkomponenten (2, 2') mit unterschiedlichen Polarisationen eingerichtet und durch die Lichtleitfaser (4) so mit dem Phasenmodulator (5) verbunden ist, dass die Polarisationen der beiden Lichtkomponenten (2, 2') zwei Hauptachsen des Phasenmodulators (5) entsprechen, und wobei die Anordnung einen hinter dem Phasenmodulator (5) angeordneten Polarisator (7) zum Überlagern von transmittierten Anteilen der zwei Lichtkomponenten (2, 2') aufweist.

6. THz-Messsystem nach einem der Ansprüche 1 bis 4, **dadurch gekennzeichnet, dass** der Phasenmodulator (5) einen wellenlängenselektiven Reflektor (8) zum Reflektieren der zweiten Lichtkomponente (2'), der für Licht der ersten Wellenlänge transmittierend ist, sowie einen weiteren Reflektor (9) zum Reflektieren der ersten Lichtkomponenten (2) aufweist, wobei zwischen den beiden Reflektoren (8,9) ein phasenmodulierender Bereich (10) zum Variieren der Phase der ersten Lichtkomponente (2) vorgesehen ist.

7. THz-Messsystem nach Anspruch 6, **dadurch gekennzeichnet, dass** der Phasenmodulator (5) ferner einen Zirkulator (11) oder einen Faserkoppler mit mindestens drei Ausgängen aufweist, wobei zwei dieser Ausgänge einem Eingang und einem Ausgang des Phasenmodulators (5) entsprechen, während ein dritter dieser Ausgänge optisch mit dem wellenlängenselektiven Reflektor (8) gekoppelt ist.

8. THz-Messsystem nach einem der Ansprüche 6 oder 7, **dadurch gekennzeichnet, dass** der wellenlängenselektive Reflektor (8) durch einen Interferenzfilter oder einen Distributed Bragg Reflector gegeben ist.

9. THz-Messsystem nach einem der Ansprüche 6 bis 8, **dadurch gekennzeichnet, dass** der wellenlängenselektive Reflektor (8) und/oder der weitere Reflektor (9) mit dem phasenmodulierenden Bereich (10) eine monolithische Struktur bilden.

10. THz-Messsystem nach einem der Ansprüche 1 bis 9, **dadurch gekennzeichnet, dass** die genannte Anordnung einen hinter den Phasenmodulator (5) geschalteten Pulskompressor (12) aufweist.

11. THz-Messsystem nach einem der Ansprüche 1 bis 10, **dadurch gekennzeichnet, dass** der THz-Empfänger eine dem Phasenmodulator (5) nachgeschaltete Detektionseinheit (6) zum Umwandeln des optischen Schwebungssignals in ein elektrisches Signal bildet.

12. THz-Messsystem nach Anspruch 11, **dadurch gekennzeichnet, dass** die Detektionseinheit (6) eingerichtet ist, sowohl den durch den Koppler (3) ausgekuppelten Anteil als auch das den Phasenmodulator (5) ver-lassende Schwebungssignal zu erfassen wobei eines dieser beiden Signale zuvor in THz-Strahlung umgewandelt wurde.

13. THz-Messsystem nach einem der Ansprüche 1 bis 12, **dadurch gekennzeichnet, dass** es eine nichtlineare Komponente (15) zum Erzeugen einer elektromagnetischen THz-Strahlung mit einer der Schwebungsfrequenz des Schwebungssignals entsprechenden Frequenz umfasst, die den THz-Sender bildet.

14. Sensoranordnung, enthaltend ein THz-Messsystem nach einem der Ansprüche 1 bis 13 sowie eine Probe (13), die so angeordnet ist, dass sie ein THz Signal, das sich durch Umformen des Schwebungssignals oder eines ausgekoppelten Teils des Schwebungssignals ergibt, beeinflusst.

15. Verwendung eines THz-Messsystems nach einem der Ansprüche 1 bis 13 oder einer Sensoranordnung nach Anspruch 14, bei der ein dem Schwebungssignal entsprechendes oder durch Umwandlung des Schwebungssignals gewonnenes THz-Signal erzeugt und eine Zeit- oder Phasenlage dieses Signals durch Ansteuern des Phasenmodulators (5) *verändert* wird.

## Claims

1. A THz measurement system comprising a THz transmitter having a light-sensitive element and a THz receiver having a light sensitive element as well as an arrangement for generating a signal having a variably adjustable time position or phase position,
wherein the said arrangement comprises at least one light source for generating a first light component (2) having a first wavelength and a second light component (2') having a second wavelength differing from the first wavelength as well as a phase modulator (5) for varying a phase of the first light component (2) and is configured for generating a beat signal by superimposing the two light components (2, 2'),
wherein the THz transmitter and the THz receiver can be activated by the beat signal or by a decoupled portion of the beat signal or by an optical signal which results by reshaping of the beat signal or of a decoupled portion of the beat signal,
wherein the phase modulator (5) is arranged between the at least one light source and the light-sensitive element of the THz receiver or between the at least one light source and the light-sensitive element of the THz transmitter, wherein the said arrangement has a common optical fiber (4) for coupling in both light components (2, 2'),
**characterized in that**
the phase modulator is arranged at an end of this optical fiber (4) remote from the at least one light source or in the extent of the optical fiber (4) and wherein the phase modulator (5) is transparent for both light components (2, 2') and is configured to vary the phase of the first light component (2) selectively independently of a phase of the second light component (2') or more than the phase of the second light component (2'),
wherein the arrangement additionally has a coupler (3) connected before the phase modulator (5) for decoupling a portion of a beat from both light components (2, 2') not yet modulated, wherein either the THz receiver is activated by the portion decoupled before the phase modulator (5) and the THz transmitter is activated by the beat signal exiting the phase modulator (5) or the THz transmitter is activated by the portion decoupled before the phase modulator (5) and the THz transmitter is activated by the beat signal exiting the phase modulator (5).

2. A THz measurement system in accordance with claim 1, **characterized in that** the at least one light source is given by two lasers (1, 1'), preferably single-mode lasers, or by a dual-mode laser (1").

3. A THz measurement system in accordance with claim 2, **characterized in that** at least one of the lasers (1, 1') or in that the dual-mode laser 1" is tunable for varying the wavelength of at least one of the light components (2, 2').

4. A THz measurement system in accordance with one of the claims 1 to 3, **characterized in that** the phase modulator (5) is electrically controllable without mechanical movement of movable parts for varying the phase of the first light component (2) and is preferably configured to vary the phase of the first light component (2) by at least n.

5. A THz measurement system in accordance with one of the claims 1 to 4, **characterized in that** the phase modulator (5) is polarization dependent, with the at least one light source being configured for generating the two light components (2, 2') with different polarizations and being connected by the optical fiber (4) to the phase modulator (5) such that the polarizations of the two light components (2, 2') correspond to two main axes of the phase modulator (5), and with the arrangement having a polarizer (7) arranged after the phase modulator (5) for superimposing transmitted portions of the two light components (2, 2').

6. A THz measurement system in accordance with one of the claims 1 to 4, **characterized in that** the phase modulator (5) has a wavelength-selective reflector (8) for reflecting the second light component (2') which is transmitting for light of the first wavelength as well as a further reflector (9) for reflecting the first light component (2), with a phase-modulating region (10) for varying the phase of the first light component (2) being provided between the two reflectors (8, 9).

7. A THz measurement system in accordance with claim 6, **characterized in that** the phase modulator (5) furthermore has a circulator (11) or a fiber optic coupler having at least three outputs, with two of these outputs corresponding to an input and to an output of the phase modulator (5), while a third one of these outputs is optically coupled to the wavelength-selective reflector (8).

8. A THz measurement system in accordance with one of the claims 6 or 7, **characterized in that** the wavelength-selective reflector (8) is given by an interference filter or by a Distributed Bragg Reflector.

9. A THz measurement system in accordance with one of the claims 6 to 8, **characterized in that** the wavelength-selective reflector (8) and/or the further reflectors (9) form a monolithic structure with the phase-modulating region (10).

10. A THz measurement system in accordance with one of the claims 1 to 9, **characterized in that** it has a pulse compressor (12) connected after the phase modulator (5).

11. A THz measurement system in accordance with one of the claims 1 to 10, **characterized in that** the THz receiver forms a detection unit (6) connected after the phase modulator (5) for converting the optical beat signal into an electrical signal.

12. A THz measurement system in accordance with claim 11, **characterized in that** the detection unit (6) is configured to detect both the portion decoupled by the coupler (3) and the beat signal exiting the phase modulator (5), wherein one of these two signals was converted into THz radiation before.

13. A THz measurement system in accordance with one of the claims 1 to 12, **characterized in that** it includes a nonlinear component (15) for generating electromagnetic THz radiation having a frequency corresponding to the beat frequency of the beat signal, which forms the THz transmitter.

14. A sensor arrangement including a THZ measurement system in accordance with one of the claims 1 to 13 as well as a specimen which is arranged so that it influences a THz signal which results by reshaping of the beat signal or of a decoupled portion of the beat signal.

15. Use of a THz measuring system in accordance with one of the claims 1 to 13 or of a sensor arrangement in accordance with claim 14, wherein a THz signal corresponding to the beat signal or acquired by converting the beat signal is generated and a time position or phase position of this signal is varied by controlling the phase modulator (5).

## Revendications

1. Système de mesure THz, comportant un émetteur THz avec un élément photosensible et un récepteur THz avec un élément photosensible ainsi qu'un agencement pour générer un signal avec une position de temps ou de phase réglable de manière variable,
ledit agencement comportant au moins une source de lumière, destinée à générer une première composante lumineuse (2) ayant une première longueur d'onde et une deuxième composante lumineuse (2') ayant une deuxième longueur d'onde différente de la première longueur d'onde, ainsi qu'un modulateur de phase (5) destiné à varier une phase de la première composante lumineuse (2), et étant agencé pour générer un signal de battement par superposition des deux composantes lumineuses (2, 2'),
l'émetteur THz et le récepteur THz pouvant être activés par le signal de battement ou par une partie découplée du signal de battement ou par un signal optique qui résulte d'une transformation du signal de battement ou d'une partie découplée du signal de battement,
le modulateur de phase (5) étant disposé entre ladite au moins une source de lumière et l'élément photosensible du récepteur THz ou entre ladite au moins une source de lumière et l'élément photosensible de l'émetteur THz, ledit agencement comportant une fibre de guidage de lumière commune (4) destinée au couplage des deux composantes lumineuses (2, 2'),
**caractérisé en ce que**
le modulateur de phase est disposé à une extrémité de cette fibre de guidage de lumière (4) opposée à ladite au moins une source de lumière ou dans le chemin de la fibre de guidage de lumière (4), le modulateur de phase (5) étant transparent pour les deux composantes lumineuses (2, 2') et agencé pour varier la phase de la première composante lumineuse (2) d'une manière sélective indépendamment d'une phase de la deuxième composante lumineuse (2') ou plus fortement que la phase de la deuxième composante lumineuse (2'),
l'agencement comprenant en plus un coupleur (3) monté devant le modulateur de phase (5) et destiné à découpler des deux composantes lumineuses (2, 2') une portion d'un battement pas encore modulé par le modulateur de phase, soit le récepteur THz étant activé par la portion découplée avant le modulateur de phase (5) et l'émetteur THz étant activé par le signal de battement quittant le modulateur de phase (5), soit l'émetteur THz étant activé par la portion découplée avant le modulateur de phase (5) et le récepteur THz étant activé par le signal de battement quittant le modulateur de phase (5).

2. Système de mesure THz selon la revendication 1, **caractérisé en ce que** ladite au moins une source de lumière est fournie par deux lasers (1, 1') de préférence monomodaux ou par un laser bimodal (1").

3. Système de mesure THz selon la revendication 2, **caractérisé en ce qu'**au moins un des lasers (1, 1') ou le laser bimodal (1 ") peut être accordé pour varier la longueur d'onde d'au moins une des composantes lumineuses (2, 2').

4. Système de mesure THz selon l'une quelconque des revendications 1 à 3, **caractérisé en ce que**, sans mouvement mécanique de pièces mobiles, le modulateur de phase (5) peut être commandé électriquement pour varier la phase de la première composante lumineuse (2) et est agencé de préférence pour varier la phase de la première composante lumineuse (2) d'au moins π.

5. Système de mesure THz selon l'une quelconque des revendications 1 à 4, **caractérisé en ce que** le modulateur de phase (5) est dépendant d'une polarisation, ladite au moins une source de lumière étant agencée pour la génération des deux composantes lumineuses (2, 2') ayant différentes polarisations et étant reliée par la fibre de guidage de lumière (4) au modulateur de phase (5) de sorte que les polarisations des deux composantes lumineuses (2, 2') correspondent aux axes principaux du modulateur de phase (5), et l'agencement comportant un polarisateur (7) disposé derrière le modulateur de phase (5) et destiné à superposer des portions transmises des deux composantes lumineuses (2, 2').

6. Système de mesure THz selon l'une quelconque des revendications 1 à 4, **caractérisé en ce que** le modulateur de phase (5) comprend un réflecteur à sélection de longueur d'ondes (8), qui est destiné à réfléchir la deuxième composante lumineuse (2') et est transmetteur pour la lumière de la première longueur d'onde, ainsi qu'un autre réflecteur (9) destiné à réfléchir la première composante lumineuse (2), entre les deux réflecteurs (8, 9) se trouvant une plage à modulation de phase (10) destinée à varier la phase de la première composante lumineuse (2).

7. Système de mesure THz selon la revendication 6, **caractérisé en ce que** le modulateur de phase (5) comprend en outre un circulateur (11) ou un coupleur à fibre ayant au moins trois sorties, deux de ces sorties correspondant à une entrée et à une sortie du modulateur de phase (5) tandis qu'une troisième de ces sorties est couplée optiquement au réflecteur à sélection de longueur d'ondes (8).

8. Système de mesure THz selon l'une quelconque des revendications 6 ou 7, **caractérisé en ce que** le réflecteur à sélection de longueur d'ondes (8) est fourni par un filtre d'interférences ou un réflecteur de Bragg distribué.

9. Système de mesure THz selon l'une quelconque des revendications 6 à 8, **caractérisé en ce que** le réflecteur à sélection de longueur d'ondes (8) et/ou l'autre réflecteur (9) forment/forme avec la plage à modulation de phase (10) une structure monolithique.

10. Système de mesure THz selon l'une quelconque des revendications 1 à 9, **caractérisé en ce que** ledit agencement comprend un compresseur d'impulsions (12) monté derrière le modulateur de phase (5).

11. Système de mesure THz selon l'une quelconque des revendications 1 à 10, **caractérisé en ce que** le récepteur THz forme une unité de détection (6) montée en aval du modulateur de phase (5) et destinée à convertir le signal de battement optique en un signal électrique.

12. Système de mesure THz selon la revendication 11, **caractérisé en ce que** l'unité de détection (6) est agencée pour détecter aussi bien la portion découplée par le coupleur (3) que le signal de battement quittant le modulateur de phase (5), un de ces deux signaux ayant été auparavant converti en un rayonnement THz.

13. Système de mesure THz selon l'une quelconque des revendications 1 à 12, **caractérisé en ce qu'**il comprend une composante non linéaire (15) qui est destinée à la génération d'un rayonnement THz électromagnétique ayant une fréquence correspondant à la fréquence de battement du signal de battement et qui forme l'émetteur THz.

14. Agencement de détection, comportant un système de mesure THz selon l'une quelconque des revendications 1 à 13 ainsi qu'un échantillon (13) qui est disposé de sorte qu'il influence un signal THz qui résulte de la transformation du signal de battement ou d'une partie découplée du signal de battement.

15. Utilisation d'un système de mesure THz selon l'une quelconque des revendications 1 à 13 ou d'un agencement de détection selon la revendication 14, dans laquelle est généré un signal THz qui correspond au signal de battement ou qui est acquis par transformation du signal de battement, et une position de temps ou de phase de ce signal est modifiée par commande du modulateur de phase (5).
